# EUROPÄISCHE PATENTSCHRIFT

(11) **EP 1 524 068 B1**
(45) Veröffentlichungstag und Bekanntmachung des Hinweises auf die Patenterteilung: **07.05.2008**
(21) Anmeldenummer: 03023017.1
(22) Anmeldetag: 13.10.2003
(51) Int. Cl.: B23Q 1/54, B23Q 11/00, B23Q 39/04, B23Q 16/10

(54) **Werkzeugmaschine mit schwenkbarem Werkstückträger, dessen Torsions-Moment kompensiert ist**
Machine tool with pivotable and torsion compensated work holder
Machine-outil avec porte-pièce pivotable compensé en torsion

(43) Veröffentlichungstag der Anmeldung: 20.04.2005
(73) Patentinhaber: Cross Hüller GmbH, 71636 Ludwigsburg (DE)
(72) Erfinder: Stengele, Gerald, 71636 Ludwigsburg (DE); Krauss, Peter, 74366 Kirchheim (DE)
(74) Vertreter: Rau, Manfred

(56) Entgegenhaltungen:
- EP-A- 1 285 721
- DE-A- 19 745 233
- US-A1- 2002 006 764

## Beschreibung

Die Erfindung betrifft eine Werkzeugmaschine nach dem Oberbegriff des Anspruches 1.

Bei diesen bekannten Werkzeugmaschinen tritt im Schwenk-Träger ein Torsions-Moment auf, das zu einer statischen Belastung des SchwenkAntriebes und zu einer Verdrillung des Schwenk-Trägers und damit zu Ungenauigkeiten bei der Bearbeitung des auf ihm gehaltenen Werkstücks führt. Zur Kompensation dieser Torsions-Momente ist es bekannt, ein Gegengewicht am Schwenk-Träger anzubringen. Wenn dieses Gegengewicht genau auf das Gewicht des Werkstücks oder der Werkstücke abgestimmt ist, führt dies zu einer genauen Kompensation des Torsions-Moments. Durch dieses Gegengewicht werden aber die zu beschleunigenden Massen stark erhöht, was dazu führt, dass die Schwenk-Antriebe entsprechend groß ausgelegt werden müssen.

Aus der EP 1 285 721 A1 ist eine Werkzeugmaschine nach dem Oberbegriff des Anspruches 1 bekannt, bei der eine Kolben-Zylinder-Einheit an einem Hebelarm des Schwenk-Trägers angreift. Auf dem Schwenk-Träger sind mehrere Werkstück-Träger angeordnet. Der Kolben-Zylinder-Einheit wird gesteuert Druckflüssigkeit von einem Verteiler zugeführt. Diese Lösung ist aufwändig.

Aus der JP 04 115841 A ist es bekannt, am Schwenk-Träger einen Kompensations-Antrieb anzubringen, bei dem es sich um einen mit Druckflüssigkeit beaufschlagbaren Kolben-Zylinder-Antrieb handelt. Dieser Kolben-Zylinder-Antrieb wird mit Druckflüssigkeit beaufschlagt, deren Druck entsprechend der Winkelstellung des Schwenk-Trägers und entsprechend der Exzentrizität des Schwerpunktes angesteuert wird. Diese bekannte Lösung ist außerordentlich aufwändig.

Aus der DE 197 45 233 A1 ist es bekannt, einen Y-Schlitten auf Ausgleichszylindern abzustützen, die als Gasdruckzylinder ausgebildet sind. Sie werden über Druckausgleichsbehälter auf konstantem Gasdruck gehalten.

Der Erfindung liegt die Aufgabe zugrunde, eine Werkzeugmaschine der gattungsgemäßen Art so auszugestalten, dass das Torsions-Moment mit äußerst einfachen Mitteln in ausreichendem Maße kompensiert wird.

Diese Aufgabe wird erfindungsgemäß durch die Merkmale im Kennzeichnungsteil des Anspruches 1 gelöst. Kern der Erfindung ist, dass mindestens ein Kraftspeicher mit einer über seinen Weg angenähert konstanten Kraft als Kurbeltrieb auf den Schwenk-Träger einwirkt, so dass ein im Wesentlichen sinusförmiges Kompensations-Moment erzeugt wird, das dem sinusförmige Torsions-Moment entgegengesetzt gerichtet ist, wodurch eine weitgehende Kompensation des Torsions-Moments erreicht wird. Ausgegangen wird dabei davon, dass der Schwenk-Antrieb auf einer Seite des Schwenk-Trägers angreift. Greift nur an dem dem Schwenk-Antrieb entgegengesetzten Ende des Schwenk-Trägers eine Kompensations-Einrichtung an, und zwar mit einer vollständigen oder angenähert vollständigen Kompensation des statischen Torsions-Momentes, so findet keine Verringerung der Torsion und damit der Verdrillung, aber eine Minimierung der statischen Belastung des Antriebs statt. Greift nur an dem dem Schwenk-Antrieb entgegengesetzten Antrieb des Schwenk-Trägers eine Kompensations-Einrichtung an, die aber keinen vollständigen Gewichtsausgleich, sondern nur einen teilweisen Ausgleich des statischen Torsions-Moments bewirkt, so führt dies zu einer Verringerung des Torsions-Moments und damit der Verdrillung des Schwenk-Trägers und zu einer Reduzierung der statischen Belastung des Antriebs. Wenn an beiden Enden des Schwenk-Trägers eine Kompensations-Einrichtung angreift, die jeweils identische Kompensations-Momente auf den Schwenk-Träger ausübt, die in der Summe vollständig dem Torsions-Moment entsprechen, dann findet eine vollständige oder nahezu vollständige statische Entlastung des Antriebes statt und eine Minimierung des Torsions-Momentes und damit der Verdrillung des Schwenk-Trägers. Wenn schließlich nur auf der Seite des Antriebs eine Kompensations-Einrichtung angreift, die ein Kompensations-Moment in der Höhe des Torsions-Momentes auf den Schwenk-Träger ausübt, dann findet wiederum keine Reduktion der Verdrillung des Schwenk-Trägers statt, aber eine vollständige oder nahezu vollständige statische Entlastung des Antriebes. Aus dem Vorstehenden ergibt sich, dass bei nur einem Kraftspeicher an einem Ende des Schwenk-Trägers eine Entlastung des Antriebs erreicht wird, während bei Anordnung je eines Kraftspeichers an jedem Ende des Schwenk-Trägers sowohl die Entlastung des Antriebs als auch eine Erhöhung der Bearbeitungsgenauigkeit erreicht wird. Bei den Kraftspeichern handelt es sich um druckmittelbeaufschlagte Kraftspeicher mit Druck-Ausgleichs-Speicher. Diese Kraftspeicher üben eine im Wesentlichen konstante Kraft über ihren Weg aus. Es entfallen also alle Antriebe zur Erzeugung eines Drucks in einem Druckmittel und sämtliche Steuerungen. Es wird eine Anpassung des Kompensations-Momentes auf dem Gewicht und der Form nach stark unterschiedliche Werkstücke ermöglicht, was besonders bevorzugt ist, da der Druck im Kraftspeicher und damit die vom Kraftspeicher ausgeübte Kraft im Wesentlichen konstant ist.

Wenn die Maßnahmen nach Anspruch 3 vorgesehen sind, wonach der Druck im Kraftspeicher einem konkreten Anwendungsfall angepasst wird, dann wird es zweckmäßig sein, den Abstand zwischen Schwenk-Achse und Kraft-Angriffs-Stelle unveränderlich zu halten. Eine Grundeinstellung des Drucks bedeutet nicht, dass eine Drucksteuerung über den Schwenkbewegungen erfolgt, sondern dass nur eine Grundeinstellung des Drucks entsprechend dem konkreten Anwendungsfall erfolgt.

Eine Anpassung des Kompensations-Momentes auf dem Gewicht und der Form nach stark unterschiedliche Werkstücke wird über die Maßnahmen nach Anspruch 4 in besonders einfacher Weise erreicht.

Weitere Merkmale, Vorteile und Einzelheiten der Erfindung ergeben sich aus der nachfolgenden Beschreibung von Ausführungsbeispielen anhand der Zeichnung. Es zeigt
- Fig. 1: eine Stirnansicht einer Werkzeugmaschine nach der Erfindung,
- Fig. 2: eine Teil-Seitenansicht entsprechend dem Sichtpfeil II in Fig. 1 mit einer Kompensations-Einrichtung in einer unverschwenkten Stellung eines Schwenk-Trägers,
- Fig. 3: die Ansicht gemäß Fig. 2 in einer verschwenkten Position der Kompensations-Einrichtung,
- Fig. 4: eine Stirn-Ansicht einer abgewandelten Ausführungsform eines Schwenk-Trägers, und
- Fig. 5: eine Teil-Seitenansicht gemäß dem Sichtpfeil V in Fig. 4 in einer Fig. 2 entsprechenden Stellung.

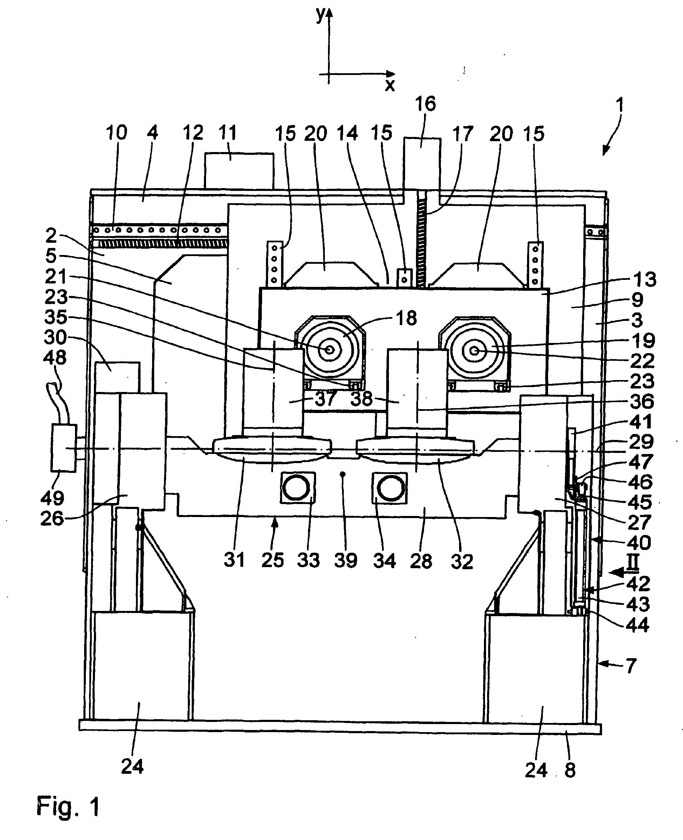

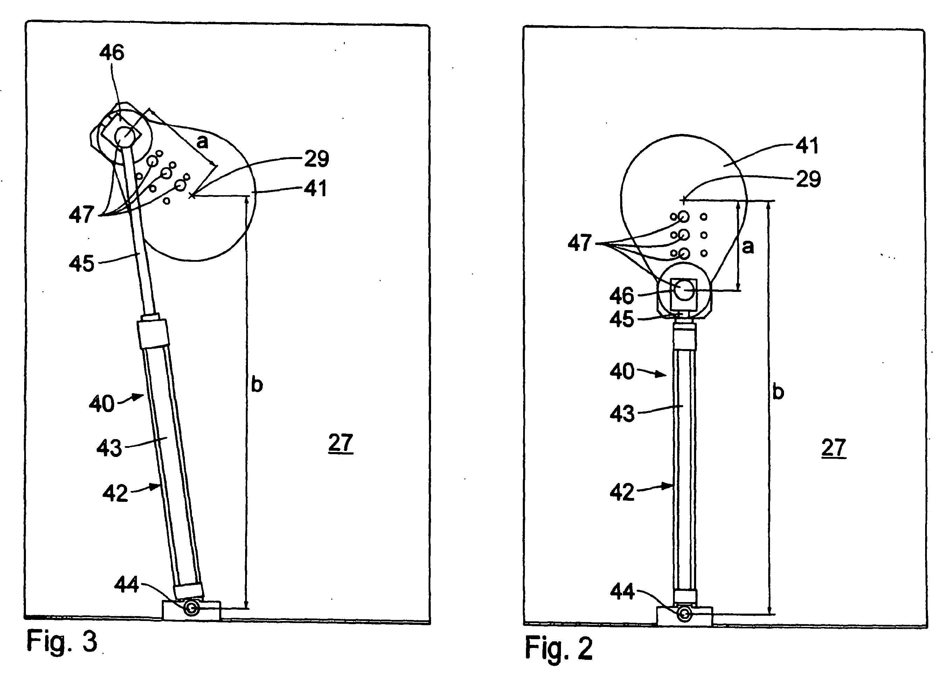

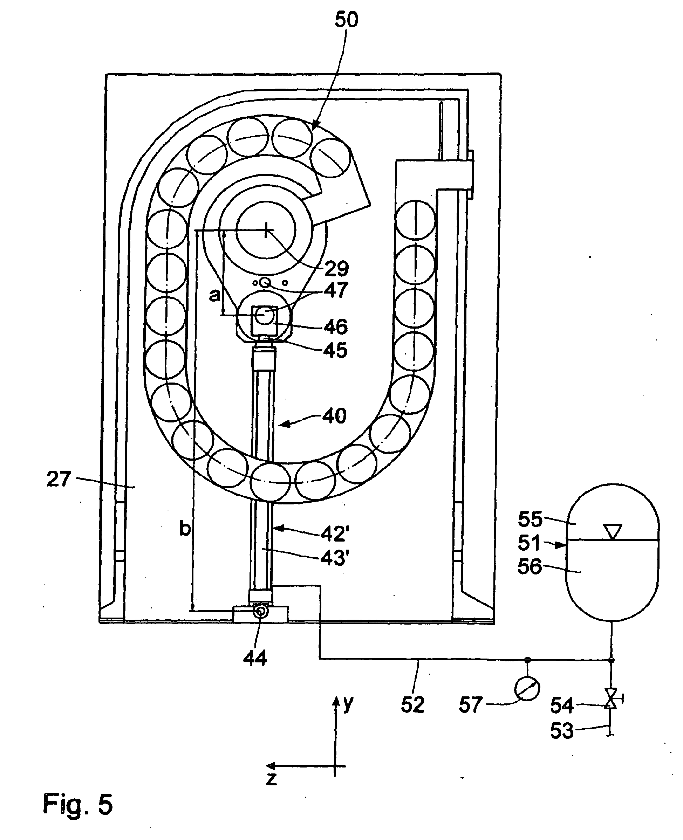

Die Fig. 1 bis 4 dienen der allgemeinen Erläuterung der Werkzeugmaschine, während Fig. 5 die konkrete erfindungsgemäße Ausgestaltung zeigt.

Bei der in der Zeichnung dargestellten Werkzeugmaschine handelt es sich um eine Doppelspindel-Werkzeugmaschine mit einem rechteckigen, durch einen Rahmen gebildeten Ständer 1, der durch sich in y-Richtung erstreckende vertikale Seiten-Stützen 2, 3 und jeweils einen diese verbindenden horizontalen, sich in x-Richtung erstreckenden oberen Quer-Holm 4 und einen unteren, nicht dargestellten Quer-Holm gebildet ist. Die Seiten-Stützen 2, 3 und die Quer-Holme 4 umschließen einen Innenraum 5, der beidseitig offen ist, und zwar insbesondere zum Arbeitsraum 6 hin. Der Ständer 1 ist über ein Untergestell 7 auf einer Fundament-Platte 8 abgestützt.

An der dem Arbeitsraum 6 zugewandten Stirnseite des Ständers 1 ist ein ebenfalls rahmenartig ausgebildeter x-Schlitten 9 in x-Richtung verschiebbar angeordnet. Hierzu sind an den Quer-Holmen 4 jeweils eine x-Führungs-Schiene 10 angebracht, auf denen der x-Schlitten 9 geführt ist. Der Antrieb des x-Schlittens 9 erfolgt mittels eines x-Motors 11 über eine sich in x-Richtung erstreckende, in den Seiten-Stützen 2, 3 des Ständers 1 drehfest gelagerte x-Kugelrollspindel 12.

Auf der dem Arbeitsraum 6 zugewandten Stirnseite des x-Schlittens 9 ist ein in y-Richtung, also vertikal, verschiebbarer y-Schlitten 13 geführt. Hierzu sind an den Seitenbereichen und einem vertikalen Mittel-Steg 14 des rahmenartigen x-Schlittens 9 jeweils eine y-Führungs-Schiene 15 angebracht, auf denen der y-Schlitten 13 verschiebbar geführt ist. Der Antrieb des y-Schlittens 13 erfolgt mittels eines auf dem x-Schlitten 9 angebrachten y-Motors 16 über eine y-Kugelrollspindel 17.

Auf dem y-Schlitten 13 befinden sich im Abstand voneinander zwei Werkzeug-Spindeln 18, 19, die sich in z-Richtung erstrecken und nach vom zum Arbeitsraum 6 hin und nach hinten durch die inneren Freiräume 20 des x-Schlittens 9 in den Innenraum 5 des Ständers 1 hineinragen. Die Werkzeug-Spindeln 18, 19 sind jeweils um eine sich in z-Richtung erstreckende z-Drehachse 21, 22 mittels eines nicht dargestellten Antriebsmotors antreibbar. Die Werkzeug-Spindeln 18, 19 sind in x- und y-Richtung relativ zueinander ortsfest auf dem y-Schlitten angeordnet, in z-Richtung jedoch auf z-Führungs-Schienen 23 verschiebbar angeordnet.

Im Arbeitsraum 6 ist vor dem Ständer 1 auf der Fundament-Platte 8 ein Werkstück-Träger-Bett 24 gelagert, auf dem ein Werkstück-Träger 25 abgestützt ist. Der Werkstück-Träger 25 ist nach Art einer Brücke ausgebildet, die auf dem Werkstück-Träger-Bett 24 abgestützte Seiten-Wangen 26, 27 aufweist, in denen ein Schwenk-Träger 28 um eine in x-Richtung verlaufende Schwenkachse 29 schwenkbar gelagert ist. Der Schwenk-Antrieb erfolgt mittels eines Schwenk-Motors 30.

Auf dem Schwenk-Träger 28 sind zwei y-Drehtische 31, 32 angeordnet, die jeweils mittels eines im Schwenk-Träger 28 angebrachten y-DrehMotor 33, 34 um eine vertikale, also in y-Richtung verlaufende, y-Drehachse 35, 36 drehantreibbar sind. Auf den y-Drehtischen 31, 32 ist jeweils ein Werkstück-Träger 37, 38 angebracht, der ein zu bearbeitendes Werkstück aufnehmen kann.

Die gleichzeitige Bearbeitung von grundsätzlich identischen Werkstücken mittels in den Spindeln 18, 19 aufgenommener Werkzeuge erfolgt in der Weise, dass identische Bewegungen der Werkzeug-Spindeln 18, 19 in x- und y-Richtung mittels des x-Schlittens 9 und des y-Schlittens 13 ausgeführt werden. Die in der Regel ebenfalls identischen Bewegungen der Werkzeuge in z-Richtung werden mittels der in z-Richtung verschiebbaren Werkzeug-Spindeln 18, 19 ausgeführt. Die Bewegungen der Werkstücke um die vertikalen y-Drehachsen 35, 36 werden durch die y-Dreh-Motoren 33, 34 ausgeführt. Schwenkbewegungen der Werkstücke um die in x-Richtung verlaufende Schwenkachse 29 werden mittels des Schwenk-Motors 30 ausgeführt.

Wie sich aus der Zeichnung ergibt, liegt der Schwerpunkt 39 des Schwenk-Trägers 28 samt y-Drehtischen 31, 32 und Werkstück-Trägem 37, 38 unterhalb der Schwenkachse 29. Je nach Form und Gewicht der auf den Werkstück-Trägem 37, 38 anzubringenden Werkstücke verschiebt sich der Schwerpunkt 39 relativ zur Schwenkachse 29; er verbleibt aber in jedem denkbaren Anwendungsfall auf der den Werkstück-Trägem 37, 38 abgewandten Seite der Schwenkachse 29. Durch diese außerhalb der Schwenkachse 29 befindliche Lage des Schwerpunkts 39 wird bei Verschwenken des Schwenk-Trägers 28 um die Schwenkachse 29 in eine Lage, in der sich der Schwerpunkt 39 nicht senkrecht unterhalb der Schwenkachse 29 befindet, während einer festen Arbeitsstellung des Schwenk-Trägers 28 zur Bearbeitung von Werkstücken in dieser verschwenkten Lage ein statisches Drehmoment auf den Schwenk-Träger 28 ausgeübt, das durch die am Schwerpunkt 39 angreifende Schwerkraft gebildet wird. Da der Schwenk-Träger 28 in dieser Arbeitsstellung mittels des Schwenk-Motors 30 festgehalten wird, der sich auf der in den Zeichnungsfiguren links dargestellten Seiten-Wange 26 befindet, wird auf den Schwenk-Träger 28 ein Torsions-Moment ausgeübt.

Um diese Torsion zu kompensieren, greift an dem dem Schwenk-Motor 30 abgewandten Ende des Schwenk-Trägers 28, also im Bereich der diesem Ende zugeordneten Seiten-Wange 27, eine Kompensations-Einrichtung 40 an, die in jeder Position eine im Wesentlichen konstante Kraft ausübt. Diese Kompensations-Einrichtung 40 greift an einem am Schwenk-Träger 28 angebrachten Hebelarm 41 an, der parallel zur Lage des Schwerpunkts 39 zur Schwenkachse 29 verläuft. Dieser Hebelarm 41 verläuft also dann, wenn der Schwerpunkt 39 sich senkrecht unterhalb der Schwenkachse 29 befindet, vertikal nach unten.

Bei der Kompensations-Einrichtung 40 kann es sich entsprechend der Darstellung in Fig. 1 bis 3 um einen als Gasfeder ausgebildeter Kraftspeicher 42 handeln, dessen mit Druckgas gefüllter Zylinder 43 im unteren Bereich der Seiten-Wange 27 mittels eines Schwenk-Gelenks 44 angelenkt ist. Seine Kolbenstange 45 ist ebenfalls mittels eines Schwenk-Gelenks 46 am Hebelarm 41 angelenkt. Derartige Gasfedern sind regelmäßig so dimensioniert, dass die Ausschub-Kraft über dem Ausschubweg der Kolbenstange 45 sich nur geringfügig ändert. Der Hebelarm 41 weist mehrere Kraft-Angriffs-Stellen 47 in unterschiedlichem Abstand a von der Schwenk-Achse 29 auf, an denen das Schwenk-Gelenk 46 angebracht werden kann, so dass die Kraft-Angriffs-Stelle 47 entsprechend dem Gewicht und der Form von zu bearbeitenden Werkstücken zur Erzeugung unterschiedlicher Kompensations-Drehmomente gewählt werden kann. Je größer das Verhältnis des Abstands b des Schwenk-Gelenks 44 von der Schwenk-Achse 29 zum Abstand a ist, umso genauer entsprechen Größe und Verlauf des von der Kompensations-Einrichtung 40 auf den Schwenk-Träger 28 bei dessen Verschwenkung um die Schwenk-Achse 29 ausgeübte Kompensations-Drehmoment dem Torsions-Moment, und zwar hinsichtlich des sinusförmigen Verlaufs. Vorteilhafterweise gilt b/a ≥ 3,0, wobei b/a nicht < 2,5 sein sollte. Wie die Praxis gezeigt hat, lassen sich ohne weiteres 90 Prozent der auftretenden Torsions-Momente kompensieren. Circa 5 Prozent der Abweichung des Kompensations-Drehmoments vom Torsions-Moment gehen darauf zurück, dass die Kraft des Kraftspeichers über dessen Weg nicht exakt konstant ist. Weitere bis zu 5 Prozent der Abweichung gehen darauf zurück, dass der Kraftspeicher 42 gegenüber der vertikalen Verbindungslinie zwischen dem unteren Schwenk-Gelenk 44 und der Schwenk-Achse 29 während der Arbeitsbewegung ausgelenkt wird. Diese Auslenkung geht darauf zurück, dass der Abstand b endlich ist. Die Veränderung der Länge des Hebelarms 41 kann - wie geschildert - in diskreten Schritten durch unterschiedliche Kraft-Angriffs-Stellen 47, aber auch durch eine stufenlose Verstellung, beispielsweise mittels einer Spindel oder dergleichen, realisiert werden.

Bei der Ausgestaltung nach Fig. 1 bis 3 werden Versorgungs-Leitungen 48 für die Werkstück-Träger 37, 38 über eine handelsübliche DrehDurchführung 49 zugeführt, die fluchtend mit der Schwenk-Achse 29 angeordnet ist und durch die Seiten-Wange 26 hindurchgeführt ist. Die DrehDurchführung 49 ist also auf der der Kompensations-Einrichtung 40 abgewandten Seite des Schwenk-Trägers 28 angeordnet.

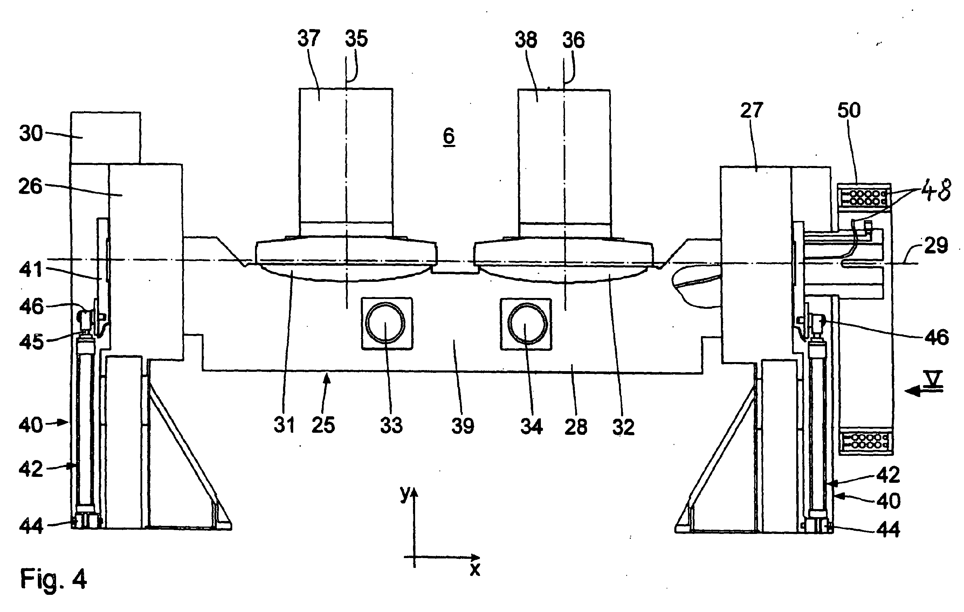

Bei der Darstellung nach Fig. 4 bis 5 ist dagegen eine Schlepp-Einrichtung 50 für die Versorgungs-Leitungen 48 vorgesehen, die auf der der Kompensations-Einrichtung 40 zugeordneten Seite angeordnet ist. Wie Fig. 4 in Verbindung mit Fig. 5 erkennen lässt, kann diese Schlepp-Einrichtung 50 den Schwenk-Bewegungen des Schwenk-Trägers 28 folgen. Eine Kollision des Kraftspeichers 42 mit der Schlepp-Einrichtung 50 erfolgt nicht, solange die Schwenkbewegung des Schwenk-Trägers 28 jeweils nur um einen Winkel von jeweils etwa 135° nach beiden Seiten gegenüber der bereits erwähnten vertikalen Verbindungslinie zwischen dem unteren Schwenk-Gelenk 44 und der Schwenk-Achse 29 erfolgt. Ein freies Durchdrehen der Kompensations-Einrichtung 40 ist hierbei nicht möglich, aber auch nicht notwendig. Bei dieser Ausgestaltung greift an beiden Enden des Schwenk-Trägers 28 jeweils eine identische Kompensations-Einrichtung 40 an.

Der Kraftspeicher 42' kann gemäß Fig. 5 auch als mit Druckmittel beaufschlagbarer Kolben-Zylinder-Antrieb ausgebildet sein, dessen Zylinder 43' an einen Druck-Ausgleichs-Speicher 51 über eine Verbindungs-Leitung 52 angeschlossen ist. In diesem Fall kann als Druckmittel entweder Druckgas oder Druckflüssigkeit oder beides eingesetzt werden. In den rundum geschlossenen Druck-Ausgleichs-Speicher 51 mündet zusammen mit der Verbindungs-Leitung 52 eine Füll-Leitung 53 ein, in der sich ein Absperr-Ventil 54 befindet. In dem Druck-Ausgleichs-Speicher 51 befindet sich eine Druckgas-Füllung 55 in Form einer Gasblase. Über die Füll-Leitung 53 wird eine Druckflüssigkeits-Füllung 56 zugeführt, bis im Druck-Ausgleichs-Speicher 51 ein vorgegebener Druck herrscht. Da die Druckflüssigkeits-Füllung 56 ständig mit dem Zylinder 43' verbunden ist, herrscht in dem ganzen System von Kraftspeicher 42' und Druck-Ausgleichs-Speicher 51 derselbe Druck. Da das Volumen des Druck-Ausgleichs-Speichers 51 und insbesondere das Volumen der Druckgas-Füllung 55 in auf Betriebsdruck vorgespanntem Zustand groß ist gegenüber dem Volumen, um das sich das erwähnte System beim Ausfahren oder Einfahren der Kolbenstange 45 in den Zylinder 43' verändert, treten nur geringfügige Druckänderungen im System auf. Bei einer solchen Ausgestaltung kann also der im Zylinder 43' herrschende Druck und damit die von der Kolbenstange 45 ausgeübte Kraft über den vollen Ausschubweg der Kolbenstange 45 fast exakt konstant gehalten werden. Der Druck im Druck-Ausgleichs-Speicher 51 wird mittels eines Druck-Messgerätes 57 erfasst.

## Patentansprüche

1. Werkzeugmaschine
a. mit einem Schwenk-Träger (28),
i. auf dem mindestens ein Werkstück-Träger (37, 38) angeordnet ist,
ii. der ein erstes Ende und ein zweites Ende aufweist,
iii. der an seinem ersten Ende und an seinem zweiten Ende um eine Schwenk-Achse (29) schwenkbar gelagert ist,
iv. dessen Schwerpunkt (39) unter Erzeugung eines auf den Schwenk-Träger (28) wirkenden sinusförmigen Torsions-Momentes außerhalb der Schwenk-Achse (29) liegt,
b. mit einem im Bereich des ersten Endes des Schwenk-Trägers (28) angreifenden Schwenk-Motor (30), und
c. mit mindestens einer Werkzeug-Spindel (18, 19), die relativ zum Werkstück-Träger (37, 38) bewegbar ist,
**dadurch gekennzeichnet, dass**
zur Erzeugung eines dem sinusförmigen Torsions-Moment entgegengerichteten und im Wesentlichen sinusförmigen Kompensations-Momentes
d. mindestens im Bereich des ersten oder des zweiten Endes des Schwenk-Trägers (28) ein Kraftspeicher (42, 42') vorgesehen ist,
i. der im Abstand (a) von der Schwenk-Achse (29) an einer Kraft-Angriffs-Stelle (47) des Schwenk-Trägers (28) angreift,
ii. der mit einem der Kraft-Angriffs-Stelle (47) entgegengesetzten Ende mittels eines Schwenk-Gelenks (44) ortsfest angelenkt ist,
iii. der das dem Torsions-Moment entgegengerichtete Kompensations-Moment auf den Schwenk-Träger (28) ausübt, und
iv. der zum Einwirken mit einer über seinen Weg angenähert konstanten Kraft auf den Schwenk-Träger (28) als Kolben-Zylinder-Einheit ausgebildet ist, dessen Zylinder (43') mit einem Druck-Ausgleichs-Speicher (51) verbunden ist,
e. für das Verhältnis eines Abstands (b) des Schwenk-Gelenks (44) von der Schwenk-Achse (29) zum Abstand (a) der Kraft-Angriffs-Stelle (47) von der Schwenk-Achse (29) gilt: b/a ≥3,0 und
f. der Abstand (a) der Kraft-Angriffs-Stelle (47) von der Schwenk-Achse (29) veränderbar ist.

2. Werkzeugmaschine nach Anspruch 1, **dadurch gekennzeichnet, dass** sowohl am ersten als auch am zweiten Ende des Schwenk-Trägers (28) ein Kraftspeicher (42') im Abstand (a) von der Schwenk-Achse (29) an einer Kraft-Angriffs-Stelle (47) des Schwenk-Trägers (28) angreift.

3. Werkzeugmaschine nach einem der Ansprüche 1 oder 2, **dadurch gekennzeichnet, dass** ein Grundwert des Druckes im Kraftspeicher (42) einstellbar ist.

4. Werkzeugmaschine nach Anspruch 1, **dadurch gekennzeichnet, dass** der Schwenk-Träger (28) mehrere Kraft-Angriffs-Stellen (47) unterschiedlichen Abstands (a) zur Schwenk-Achse (29) aufweist, an denen der Kraftspeicher (42, 42') mit dem Schwenk-Träger (28) verbindbar ist.

## Claims

1. Machine tool comprising
a. a pivotable carrier (28),
i. on which at least one workpiece carrier (37, 38) is disposed,
ii. which has a first end and a second end,
iii. wherein the first end and the second end of which are pivotable about a pivot axis (29),
iv. wherein the centre of gravity (39) of which lies beyond the pivot axis (29) and thus creates a sinusoidal torque which acts upon the pivotable carrier (28),
b. a pivot motor (30) that engages with the pivotable carrier (28) in the vicinity of the first end thereof, and
c. at least one tool spindle (18, 19) which is movable relative to the workpiece carrier (37, 38),
**characterized in that**
for creating a substantially sinusoidal compensating torque which is opposite to the sinusoidal torque,
d. an energy storage device (42, 42') is provided at least in the vicinity of the first or the second end of the pivotable carrier (28) wherein said energy storage device (42, 42')
i. engages with a point of application of force (47) of the pivotable carrier (28) at a distance (a) from the pivot axis (29),
ii. is stationarily joined to an end, which is opposite to the point of application of force (47), by means of a pivot joint (44),
iii. applies the compensating torque, which is opposite to the torque, to the pivotable carrier (28),
iv. is a piston-cylinder-unit the cylinder (43') of which is connected to a pressure-compensating reservoir (51) so as to apply a force, which is virtually constant along its path, to the pivotable carrier (28),
e. the following applies to the relationship of a distance (b) of the pivot joint (44) from the pivot axis (29) and the distance (a) of the point of application of force (47) from the pivot axis (29): b/a ≥ 3.0, and
f. the distance (a) of the point of application of force (47) from the pivot axis (29) is variable.

2. Machine tool according to claim 1, **characterized**
**in that** both on the first and on the second end of the pivotable carrier (28), an energy storage device (42') engages with a point of application of force (47) of the pivotable carrier (28) at a distance (a) from the pivot axis (29).

3. Machine tool according to one of the claims 1 or 2, **characterized**
**in that** the pressure in the energy storage device (42) is adjustable to a basic value.

4. Machine tool according to claim 1, **characterized**
**in that** the pivotable carrier (28) has several points of application of force (47) which are disposed at various distances (a) from the pivot axis (29) and enable the energy storage device (42, 42') to be connected to the pivotable carrier (28).

## Revendications

1. Machine-outil
a. avec un support pivotant (28)
i. sur lequel est placé au moins un porte-pièce (37, 38),
ii. qui présente une première extrémité et une deuxième extrémité,
iii. qui est placé à sa première extrémité et à sa deuxième extrémité de façon pivotable autour d'un axe pivotant (29),
iv. dont le centre de gravité (39) se trouve à l'extérieur de l'axe pivotant (29) lorsqu'un couple de torsion sinusoïdal agissant sur le support pivotant (28) est produit,
b. avec un moteur pivotant (30) prenant au niveau de la première extrémité du support pivotant (28), et
c. avec au moins une tige à outil (18, 19) déplaçable relativement au porte-pièce (37, 38),
**caractérisée en ce que**
pour produire un couple de compensation essentiellement sinusoïdal et orienté dans le sens opposé au couple de torsion sinusoïdal,
d. au moins un collecteur de puissance (42, 42') est prévu au niveau de la première ou de la deuxième extrémité du support pivotant (28)
i. lequel collecteur vient prendre à une distance (a) de l'axe pivotant (29) sur une zone d'application de force (47) du support pivotant (28),
ii. lequel collecteur est articulé et fixé par un bras pivotant (44) à une extrémité opposée à la zone d'application de force (47)
iii. lequel exerce le couple de compensation, opposé au couple de torsion, sur le support pivotant (28) et
iv. lequel, pour agir sur le support pivotant (28) avec une force presque constante dans son application, est conçu comme une unité de cylindre à piston, dont le cylindre (43') est relié à une mémoire de compensation de pression (51)
e. pour le rapport entre une distance (b) du bras articulé (44) de l'axe pivotant (29), et une distance (a) de la zone d'application de force (47) de l'axe pivotant (29), on a : b/a ≥ 3,0 et
f. la distance (a) de la zone d'application de force (47) par rapport à l'axe pivotant (29), est modulable.

2. Machine-outil selon la revendication 1, **caractérisée en ce que** aussi bien sur la première que sur la deuxième extrémité du support pivotant (28), un collecteur de puissance (42') vient prendre sur une zone d'application de force (47) du support pivotant (28), à une distance (a) de l'axe pivotant (29).

3. Machine-outil selon l'une des revendications 1 ou 2, **caractérisée en ce que** dans le collecteur de puissance (42), une valeur de base de la pression est réglable.

4. Machine-outil selon la revendication 1, **caractérisée en ce que** le support pivotant (28) présente plusieurs zones d'application de force (47) à des distances (a) différentes de l'axe pivotant (29), sur lesquels le collecteur de puissance (42, 42') peut être relié au support pivotant (28).
